## Europäisches Patentamt

## European Patent Office

## Office européen des brevets

(19)

(11) Veröffentlichungsnummer: **0 111 760**
**B1**

(12) **EUROPÄISCHE PATENTSCHRIFT**

(45) Veröffentlichungstag der Patentschrift:
**13.05.87**

(51) Int. Cl.⁴: **B 62 D  13/02**, B 60 D  1/14

(21) Anmeldenummer: **83111490.5**

(22) Anmeldetag: **17.11.83**

(54) **Lastzug mit Zwangslenkung.**

(30) Priorität: **16.12.82  DE 3246572**

(43) Veröffentlichungstag der Anmeldung:
**27.06.84 Patentblatt 84/26**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**CH - A - 570 294**
**DE - A - 2 808 173**
**DE - A - 3 008 787**
**DE - A - 3 134 301**
**DE - C - 1 019 850**
**US - A - 2 124 947**
**US - A - 2 792 238**

(73) Patentinhaber: **Orthaus, Dieter, Kaland 28,**
**D-4422 Ahaus-Wüllen (DE)**

(72) Erfinder: **Orthaus, Dieter, Kaland 28,**
**D-4422 Ahaus-Wüllen (DE)**

(74) Vertreter: **Schulte, Jörg, Dipl.-Ing., Hauptstrasse 2,**
**D-4300 Essen-Kettwig (DE)**

ACTORUM AG

**Beschreibung**

Die Erfindung betrifft einen Lastzug, bestehend aus Zugwagen und Anhänger, die eine Zugeinheit bilden, indem sie über eine einerseits am Zugwagen gegen seitliches Verschwenken festlegbare und andererseits an der als selbstspurende Nachlaufachse mit Drehgestell ausgebildeten Achse des Anhängers mit zugeordneter Schwenkeinrichtung angeschlagenen, ein gleichschenkliges Dreieck bildenden Zuggabel verbunden sind (siehe DE-A 3 008 787).

Zugwagen und Anhänger insbesondere von Grossraumlastzügen können optimal betrieben werden, wenn Zugwagen und Anhänger so aneinandergekoppelt sind, dass bei Geradeausfahrt die Verbindung zwischen beiden Einheiten möglichst starr, beim Kurvenfahren und beim Wenden aber eine möglichst grosse Beweglichkeit gegeben ist. Da die Gesamtlänge derartiger Lastzüge begrenzt ist, soll ausserdem der Abstand zwischen Zugwagen und Anhänger möglichst gering sein. Hierzu sind verschiedene Zwangslenkungen entwickelt worden. Bei einer bekannten Zwangslenkung (Verkehrs-Rundschau, 8. 9. 1979) ist der Anhänger über eine Teleskopgabel an den Zugwagen angeschlossen, wobei die Teleskopgabel in Querrichtung gesperrt ist. Dadurch kann der ausschliessliche Zug-Drehpunkt in den Kugeldrehkranz des Anhängers verlagert werden. Um den wechselseitigen Spurlauf zu verhindern, weist diese Nachlaufachse eine Druckluftsperre auf, die ab einer gewissen Geschwindigkeit automatisch einfällt und die Anhängerachse verstarrt, so dass diese quasi zur dritten Achse des Zugwagens wird. Diese Druckluftsperre ist an den Zugwagen angeschlossen und sperrt oder entsperrt die Achse je nach vorgegebener Geschwindigkeit des Fahrzeugs. Weil diese Regelung aufwendig ist und zu Fehlverhalten oder Schaltfehlern führen kann, ist eine weitere Zwangslenkung entwickelt worden (DE-OS 3 008 787.7), bei der über eine weitere Dreheinrichtung, d.h. über ein zweites Drehlager, ein zusätzlicher Drehpunkt geschaffen ist. Auch hier ist die Zuggabel am Zugwagen festlegbar. Nachteilig ist die aufwendige Bauweise mit zwei Kugeldrehlagern sowie eine in der Regel eingesetzte zusätzliche Verbindung zwischen den Kugeldrehlagern und dem Zugwagen.

Aus der US-A 2 124 947 ist ein Fahrzeug bekannt, das über ein Diagonalgestänge mit einem Einradanhänger verbunden ist. Dabei ist das aus zwei sich kreuzenden Stäben bestehende Verbindungsgestänge entsprechend gelenkig an dem Fahrzeug und auch am Anhänger angeschlagen, und zwar mit dem Ziel, insbesondere dem Einradanhänger die notwendige Stabilität zu geben. Darüber hinaus soll aber auch der Abstand zwischen beiden Teilen möglichst gross sein, um so eine einwandfreie Kurvenfahrt zu ermöglichen. Bei dem dieser Schrift zu entnehmenden Zug handelt es sich um einen Wohnwagenanhänger o.ä., der an einen PKW angekoppelt werden soll.

Demgegenüber zeigen die CH-A 570 294 und die DE-A 3 134 301 Lastzüge, bei denen der Zugwagen und der Anhänger eine Zugeinheit bildend miteinander verbunden sind. Im Gegensatz zu der CH-A 570 294 zeigt die DE-A 3 134 301 eine beide fest miteinander verbindende Zwangslenkung, die allerdings nur aus einer die beiden diagonal angeordneten Stangen aufweisenden Schwenkeinrichtung besteht. Diese Schwenkeinrichtung ist direkt mit dem Zugfahrzeug verbunden, bzw. nach der CH-A 570 294 bilden dort die Diagonalstangen lediglich eine Hilfsvorrichtung für die eigentliche Zugwagen und Anhänger miteinander verbindende Deichsel. Beide Lösungen sind aufwendig und schwerfällig, wobei insbesondere die Lösung nach der DE-A 3 134 301 sehr schwerfällig und schlecht zu handhaben ist, da Zugwagen und Anhänger wie beschrieben lediglich über die beiden sich diagonal kreuzenden, starren und gleichlangen Kupplungsstangen verbunden sind.

Der Erfindung liegt die Aufgabe zugrunde, die bekannten Zwangslenkungen für Lastzüge so weiterzubilden, dass Zugwagen und Anhänger im geringstmöglichen Abstand zueinander verfahrbar sind und die Zwangslenkung unter Beibehaltung der Einpunktkupplung im Aufbau vereinfacht ist.

Die Aufgabe wird erfindungsgemäss dadurch gelöst, dass die zwischen der Zuggabel und dem Drehgestell angeordnete Schwenkeinrichtung von diagonal verlaufenden und schwenkbar am Drehgestell und der Zuggabel angeordneten Stangen gebildet ist, wobei die zugeordneten Schwenklager jeweils versetzt zur Längsachse des Zugwagens endseitig des kurzen Schenkels, der die Basis der ein gleichschenkliges Dreieck bildenden Zuggabel darstellt, bzw. endseitig des Querbalkens, der dem Drehgestell vorgesetzt ist, angeordnet sind.

Eine derartige Zwangslenkung ermöglicht es, Zugwagen und Anhänger in einem Abstand von nur 750 mm zu verfahren, ohne dass bei Kurvenfahrten oder beim Rangieren beide miteinander kollidieren können. Die vier Drehlager sind dabei so angeordnet, dass sie zusammen das fünfte Drehlager bzw. den eigentlichen Drehpunkt bilden, der für das genaue Nachführen des Anhängers benötig wird. Dieser durch die Stangen gebildete Drehpunkt liegt noch unterhalb des Anhängers, wodurch bei genauer Nachführung des Anhängers ein dichtes Aneinanderfahren beider Teile im immer gleichen Abstand möglich ist. Es entfällt somit die Notwendigkeit zusätzlicher sich bzw. den Abstand zwischen Zugwagen und Anhänger jeweils variierende bzw. anpassende Vorrichtungen zu schaffen. Dabei kann in vorteilhafter Weise auf die bisher eingesetzten Einpunktkupplungen, d.h. die üblichen Zuggabeln, zurückgegriffen werden, die eine einfache Handhabung sicherstellen. Für den Fahrer des Lastzuges ergeben sich somit gegenüber der bisherigen Handhabung keinerlei Änderungen, so dass damit gleichzeitig auch Fehlverhalten verhindert ist. Die diagonal und unterhalb des Anhängers verlaufenden Stangen stellen keine Gefährdung des Bedienungspersonals dar.

Die diagonal verlaufenden Stangen sind im Abstand übereinander angeordnet, um das Verschieben des von ihnen gebildeten Drehpunktes sicher zu ermöglichen. Darüber hinaus können so ohne weiteres auch Höhenunterschiede zwischen Zugwagen und Anhänger beispielsweise beim Durchfahren von Geländeunebenheiten aufgefangen werden. Zur Verringerung der Gesamtbauhöhe ist es vorteilhafterweise vorgesehen, die die Schwenklager verbindenden Stangen ineinandergeführt auszubilden. Dann können die Schwenklager jeweils in einer Ebene angeordnet werden, so dass eine grosse Bodenfreiheit gewährleistet ist.

Eine günstige Ineinanderführung der beiden Stangen ist gemäss einer Ausbildung der Erfindung dadurch erreicht, dass die eine, die Schwenklager verbindende Stange einen Längsschlitz aufweist, während die andere Stange im gleichen Bereich im Querschnitt reduziert ausgebildet ist. Dadurch können beide Stangen ineinanderverlaufend hin- und herbewegt werden, wobei durch die entsprechende Ausbildung des Längsschlitzes sicherzustellen ist, dass auch eine in senkrechter Richtung erfolgende Bewegung möglich ist, ohne dass die Stangen aneinanderstossen, reiben oder sonst wie beschädigt werden.

Auch bereits vorhandene Lastzüge können ohne grossen Aufwand umgerüstet werden, da es lediglich notwendig ist, Anschlagpunkte für die notwendigen Schwenklager zu schaffen. Hierzu weist das Drehgestell zweckmässig einen in Richtung Zugwagen vorgesetzten Querbalken auf, dem die Schwenklager zugeordnet sind. Somit ist auch gleichzeitig die Möglichkeit gegeben, die einzelnen Schwenklager ausreichend weit auseinander anzuordnen. Der Querbalken kann ohne grossen Aufwand am Drehgestell angebracht, beispielsweise angeschweisst, werden. Zweckmässig ist es darüber hinaus, dass die Zuggabel am dem Anhänger zugewandten Ende einen Querbalken aufweist, der schwenkbar an der Zuggabel befestigt ist und endseitig die Schwenklager trägt. Diese Ausbildung des Querbalkens vereinfacht die Anordnung der Schwenklager und bringt darüber hinaus die notwendige Stabilität in das gesamte System.

Zur einfachen Verbindung der Schwenklager mit dem Querbalken weisen die Querbalken endseitig schräg angesetzte Ansätze auf, die ihrerseits die einzelnen Schwenklager aufnehmen.

Um die einzelnen Schwenklager und damit die diagonal verlaufenden Stangen als Verbindung der einzelnen Schwenklager möglichst optimal anzubringen, beträgt die Länge der Querbalken zweckmässig 30 bis 70% der Breite des Zugwagens bzw. des Anhängers. Je dichter die einzelnen Schwenklager der Längsachse von Zugwagen und Anhänger zugeordnet sind, desto geringere Querkräfte müssen durch die Stangen aufgenommen werden. Andererseits ist dann die Beweglichkeit bzw. der Wendekreis eingeschränkt. Das Optimum liegt in den oben angegebenen Längen der Querbalken. Dabei kann es zur Optimierung der Handhabbarkeit zweckmässig sein, dass der dem Anhänger zugeordnete Querbalken länger, vorzugsweise um 20 bis 30% länger als der der Zuggabel zugeordnete Querbalken ist.

Eine einfache und wirksame Festlegung der Zuggabel ist erfindungsgemäss erreicht, indem die Sperre zum Festlegen der Zuggabel als der Einpunktkupplung vorgelagerter Bügel mit der Kupplungsbohrung angepasstem Führungsloch ausgebildet ist. Die Zuggabel wird mit der vorgesetzten Kupplungsbohrung durch das Führungsloch hindurchgeschoben und dann zwangsgeführt in die Einpunktkupplung eingeschoben, damit erfolgt gleichzeitig zwangsläufig das Festlegen der Zuggabel. Bei ebenem Boden wird die Zuggabel immer etwa die gleiche Position einnehmen, so dass das Einführen weiter dadurch erleichtert wird, dass die Zuggabel über ein Spannschloss mit dem Querbalken verbunden ist. So kann auch eine verhältnismässig schwere Zuggabel allein durch einen einzigen Mann sicher in die Einpunktkupplung bzw. den Bügel eingeführt werden.

Eine andere Möglichkeit zum Festlegen der Zuggabel ist die, bei dem die beiden Schenkel der Zuggabel verlängert ausgebildet sind, so dass ihre freien Endpunkte auf einer gedachten Geraden mit der Kupplungsbohrung liegen und in dem Zugwagen zugeordneten Schleifplatten geführt sind. Auf diese Weise wird ein einfaches und automatisches Starrsetzen der Zuggabel beim Kuppeln von Zugwagen und Anhänger erreicht, ohne dass die Zuggabel durch eine Schwenksperre festgelegt werden muss. Dabei sind die in den Schleifplatten geführten Endpunkte zweckmässigerweise abgerundet oder mit einer Kugel versehen.

Die Erfindung zeichnet sich insbesondere dadurch aus, dass eine Zwangslenkung geschaffen ist, die im Aufbau einfach ist und eine Einpunktkupplung hat, so dass die Handhabung einfach und den gesetzlichen Auflagen genügend gesichert ist. Vorteilhaft ist weiter, dass ohne jedwede Stabilisatoren ein einwandfreier Betrieb des Lastzuges möglich ist, da die Nachlaufachse durch die Zwangslenkung sicher geführt ist. Auch hier ist erreicht, dass eine Lenkbegrenzung nicht notwendig ist, da durch die geschaffene Zwangslenkung ein Anstossen des Anhängers an den Zugwagen sicher unterbunden ist.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

Fig. 1 eine Seitenansicht eines Lastzuges,

Fig. 2 eine Unteransicht im Bereich der Verbindung zwischen Zugwagen und Anhänger bei Geradeausfahrt,

Fig. 3 und 6 die Ansicht gemäss Fig. 2 bei Kurvenfahrt,

Fig. 4 eine Seitenansicht im Bereich der Verbindung zwischen Zugwagen und Anhänger und

Fig. 5 eine Einzelheit der Verbindung ähnlich Fig. 4 und

Fig. 7 eine Draufsicht auf das Verbindungsgestänge.

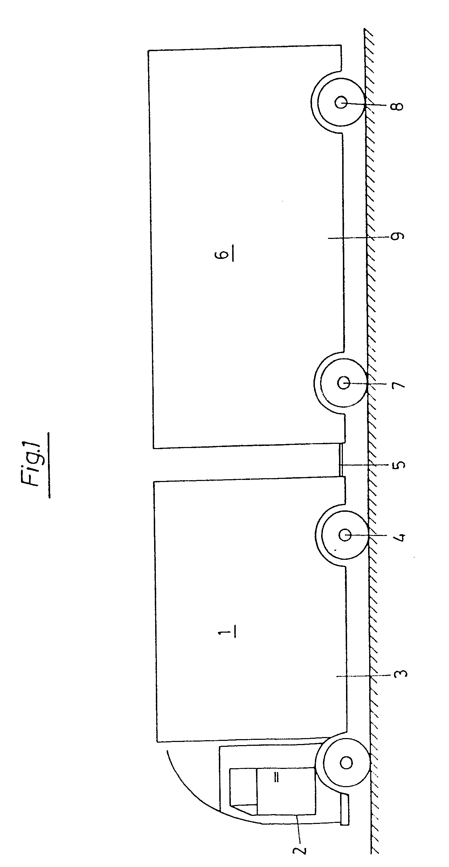

Bei dem in Fig. 1 gezeigten Lastzug handelt es sich um einen Grossraumlastzug, der allgemein unter der Fachbezeichnung Jumbo bekannt ist. Der Zugwagen 1 trägt das Fahrerhaus 2 und weist einen Laderaum 3 auf. Seine hintere Achse 4 ist starr ausgebildet. Der Zugwagen 1 ist im Bereich der hinteren Achse 4 über eine Zuggabel 5 mit dem Anhänger 6 verbunden. Der Anhänger 6 weist neben der drehbar ausgebildeten ersten Achse 7 eine oder mehrere starre hintere Achsen 8 auf. Sein Laderaum kann durch Einhaltung eines geringstmöglichen Abstandes zwischen Zugwagen 1 und Anhänger 6 optimal ausgebildet werden.

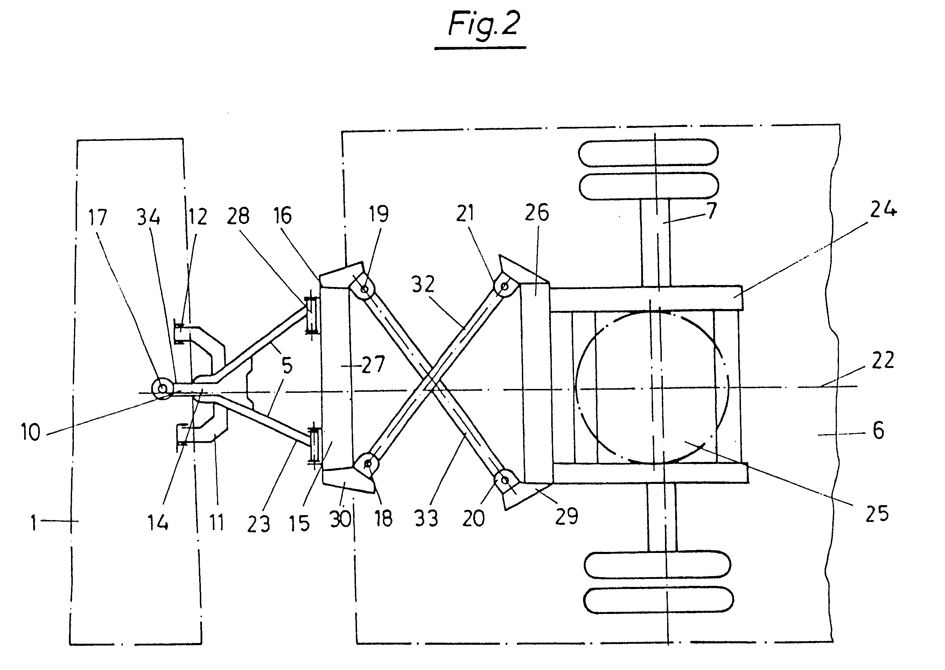

Fig. 2 zeigt den Bereich der Verbindung zwischen Zugwagen 1 und Anhänger 6 in Unteransicht. Die Verbindung insgesamt zwischen Zugwagen 1 und Anhänger 6 wird dabei durch die Einpunktkupplung 10 bewerkstelligt. Diese Einpunktkupplung entspricht den üblichen Verbindungen zwischen Zugwagen und Anhänger durch eine Zuggabel 5. Diese Zuggabel 5 ist mit einer Sperre 11 versehen, um so nach dem Ankuppeln von Zugwagen 1 und Anhänger 6 die Zuggabel 5 im Bereich des Zugwagens 1 festlegen zu können. Die Sperre 11 ist schwenkbar ausgebildet und weist hierzu zwei Schwenklager 12 auf. Die schwenkbare Sperre 11 wird dabei nach dem Einrasten der Einpunktkupplung 10 über die Zuggabel 5 geschwenkt und beispielsweise durch einen unterhalb der Zuggabel angeordneten Bolzen gesperrt.

Fig. 2 verdeutlicht weiter, dass die Zuggabel 5 hier als gleichschenkliges Dreieck ausgebildet ist, wobei der Eckpunkt 14 den festgelegten Drehpunkt 17 bildet, während die beiden Eckpunkte 15, 16, die den kurzen Schenkel begrenzen, der die Basis des von der Zuggabel gebildeten gleichschenkligen Dreiecks bildet, die Schwenklager 18, 19 aufweisen, die Teil der zusätzlichen Dreheinrichtung sind. Diese Schwenklager 18, 19 sind korrespondierend mit den Schwenklagern 20, 21 und beidseitig der Längsachse 22 von Zugwagen 1 und Anhänger 6 angeordnet.

Dieses Drehgestell 24 mit Drehkranz 25 ist durch einen Querbalken 26 ergänzt, an dem die Schwenklager 20, 21 befestigt bzw. angeordnet sind. Ähnlich angeordnet sind auch die Schwenklager 18, 19, und zwar an dem schwenkbar an der Zuggabel 6 angeordneten Querbalken 27. Hierzu weist der Querbalken 27 Schwenklager 28 auf. Um eine einfache und zugleich sichere Anbringung der diagonal verlaufenden Stangen 32, 33 zu ermöglichen, sind die Querbalken 26, 27 mit schräg angesetzten Ansätzen 29, 30 versehen. Dabei sind über die diagonal verlaufenden Stangen 32, 33 jeweils die schräg gegenüberliegenden Schwenklager 18 und 21 bzw. 19 und 20 verbunden.

Beim Ankuppeln des Anhängers 6 an den Zugwagen 1 ist es lediglich notwendig, dass die Einpunktkupplung 10 eingerastet wird. Zur Vereinfachung kann das Verbindungsrohr 34 längenveränderbar ausgebildet sein bzw. über Bolzen in der eigentlichen Zuggabel 5 festgelegt werden. Weitere Massnahmen sind nicht notwendig, da damit die gewünschte Zwangslenkung hergestellt ist.

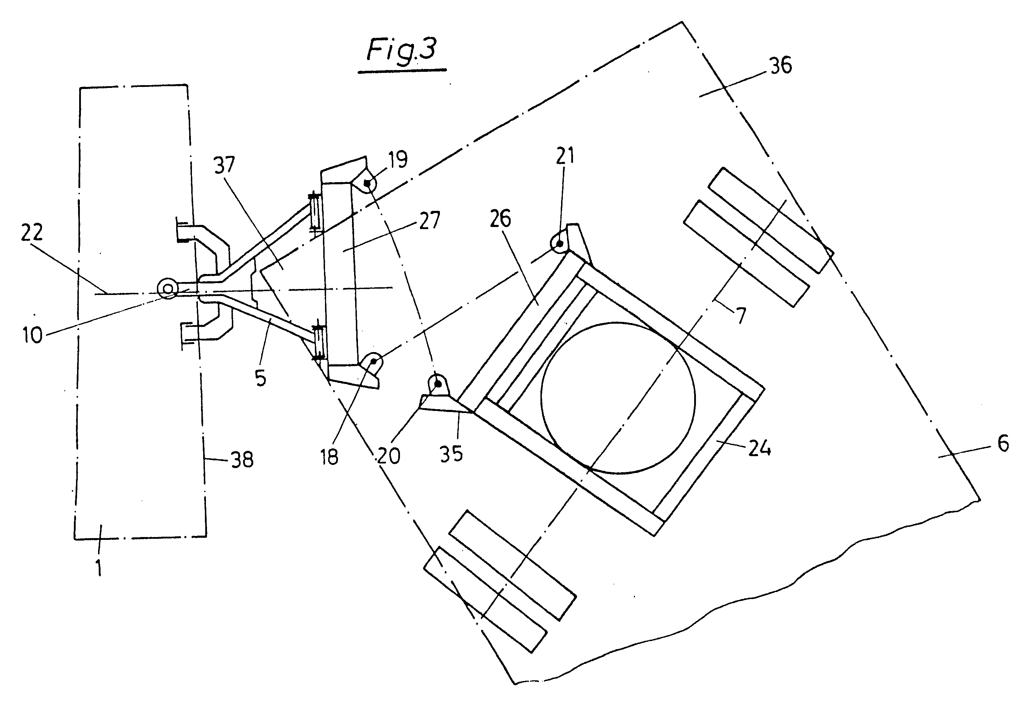

Fig. 3 zeigt den Bereich der Verbindung zwischen Zugwagen 1 und Anhänger 6 in Kurvenfahrt. Dabei ist die ungünstigste Position dargestellt. Eine Beeinflussung bei der gezeigten Anlenkung 35 durch den Aufbau 36 bzw. insbesondere dessen Ecke 37 auf die Rückwand 38 des Zugwagens 1 kann wie gezeigt nicht eintreten. Aufgrund der Ausbildung des zusätzlichen Drehpunktes, der durch die Schwenklager 18, 19, 20, 21 und die sie verbindenden diagonal verlaufenden Stangen 32, 33 gebildet wird, kann dieser seine Lage im Verhältnis zur Längsachse 22 des Zugwagens 1 ändern, was zur optimalen Ausbildung der Zwangslenkung führt.

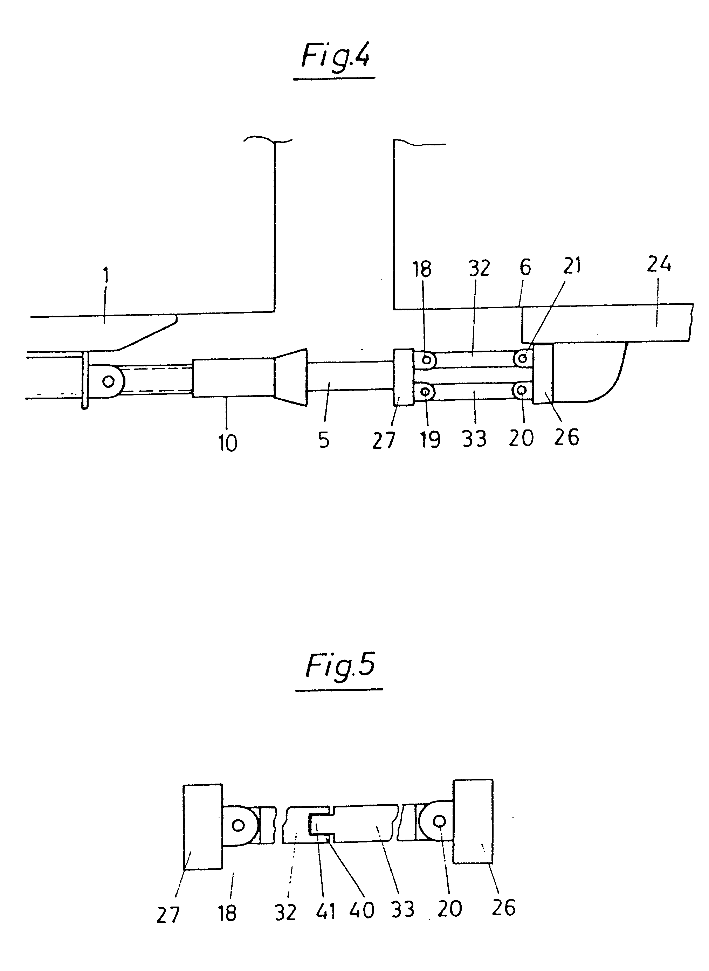

Die Fig. 4 und 5 zeigen die Verbindungsstelle zwischen Zugwagen 1 und Anhänger 6 in Seitenansicht. Mit 1 bzw. 6 sind der Zugwagen und der Anhänger bezeichnet, während die Zuggabel das Bezugszeichen 5 trägt. Am dem Anhänger 6 zugewandten Ende 23 trägt die Zuggabel 5 zunächst den Querbalken 7, an dem die übereinanderliegenden Schwenklager 18, 19 angeordnet sind. Diese sind durch die diagonal verlaufenden und übereinander angeordneten Stangen 32, 33 jeweils miteinander verbunden. Dieses Übereinanderanordnen der Stangen 32, 33 beeinflusst die Bodenfreiheit von Zugwagen 1 und Anhänger 6 geringfügig. Um auch dieses weitgehend auszuschalten, ist gemäss Fig. 5 eine Ineinanderführung der beiden Stangen 32, 33 vorgesehen. Dies wird beispielsweise dadurch erreicht, dass die Stange 32 einen Längsschlitz 40 und die Stange 33 eine entsprechende Verdünnung 41 aufweist. Längsschlitz 40 und Verdünnung 41 sind dabei einmal so auszubilden, dass die auftretenden Kräfte, insbesondere auch beim Bremsen auftretende Kräfte, aufgefangen und abgeleitet werden und andererseits auch in vertikaler Richtung ausreichende Bewegungsfreiheit zwischen beiden Stangen 32, 33 gewährleistet ist.

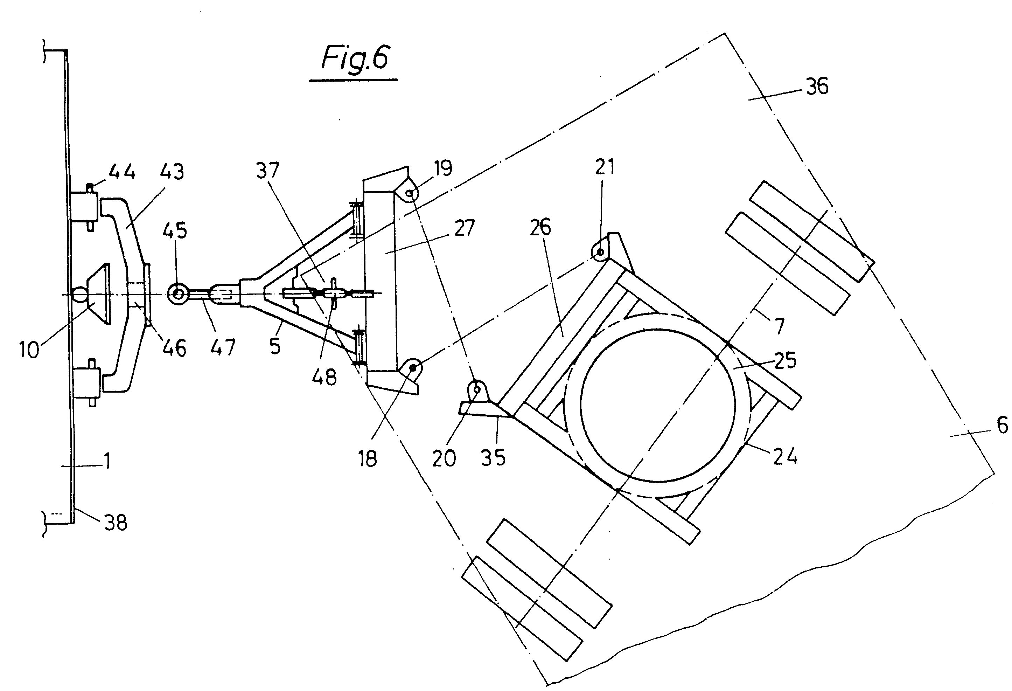

Bei Fig. 6 steht der Anhänger 6 im Abstand zum Zugwagen 1. Die Zuggabel ist so gestellt, dass sie einfach in den Bügel 43 eingeführt werden kann. Der Bügel 43 ist über Schwenklager 44 beweglich am Zugwagen 1 angeordnet. Er ist mit einem der Kupplungsbohrung 45 der Zuggabel 5 angepassten Führungsloch 46 ausgerüstet. Die auf das Rohrstück 47 aufgesetzte Kupplungsbohrung 47 wird durch dieses Führungsloch 46 hindurchgeschoben und dann in die Einpunktkupplung 10 eingeschoben. Nach Einsetzen des Verriegelungsbolzens, der hier nicht dargestellt ist, ist dann die Zuggabel 5 automatisch festgesetzt.

Das Einführen der Zuggabel 5 mit der vorgesetzten Kupplungsbohrung 45 wird erleichtert, indem die Zuggabel über ein Spannschloss 48 am Querbalken 27 angeschlagen ist. Durch Betätigen des Spannschlosses 48 kann auf diese Art und Weise die Zuggabel 5 einfach um die Schwenklager 28 angehoben oder gesenkt werden.

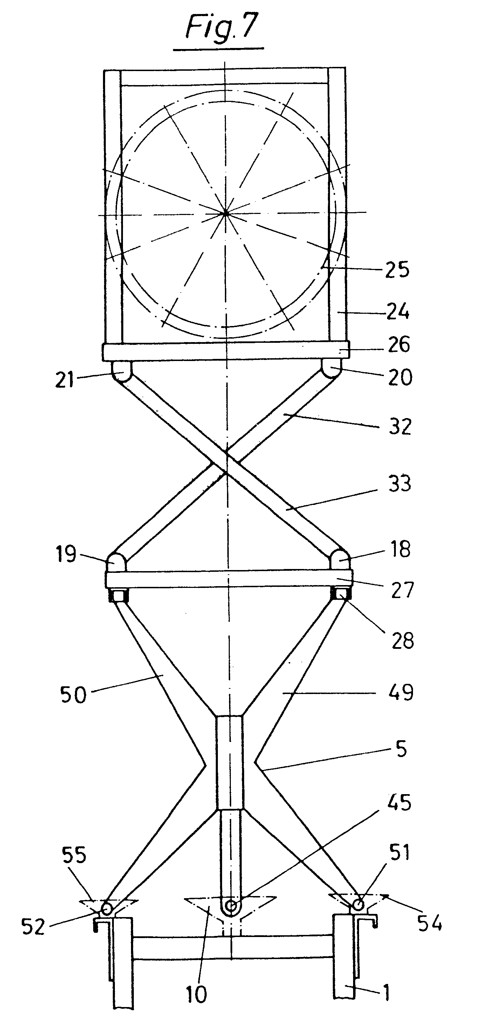

Bei der in Fig. 7 gezeigten Ausführungsform sind die Schenkel 49, 50 der Zuggabel 5 verlängert ausgebildet, so dass diese eine Art X bildet. Die Schenkel 49, 50 sind dabei so weit vorgesehen, dass ihre Endpunkte 51, 52 auf einer durch die Kupplungsbohrung 45 gehenden gedachten Geraden liegen. Diese Endpunkte 51, 52 sind in Schleifplatten 54, 55 geführt, die dem Zugwagen 1 zugeordnet sind und ähnlich der Einpunktkupplung 10 ausgebildet sind, wobei allerdings hier die Endpunkte 51, 52 nicht festgelegt sind, sondern nur schleifend geführt werden.

Beim Kuppeln von Zugwagen 1 und Anhänger 6 braucht man nun lediglich auf das richtige Einführen der Kupplungsbohrung 45 der Zuggabel 5 in die Einpunktkupplung 10 zu achten. Das Verstarren der Zuggabel 5 ergibt sich quasi automatisch, da dann die Endpunkte 51, 52 der Schenkel 49, 50 automatisch in den Schleifplatten 54, 55 liegen.

## Patentansprüche

1. Lastzug bestehend aus Zugwagen (1) und Anhänger (6), die eine Zugeinheit bilden, indem sie über eine einerseits am Zugwagen (1) gegen seitliches Verschwenken festlegbare und andererseits an der als selbstspurende Nachlaufachse mit Drehgestell (24) ausgebildeten Achse (7) des Anhängers (6) mit zugeordneter Schwenkeinrichtung angeschlagenen, ein gleichschenkliges Dreieck bildenden Zuggabel (5) verbunden sind, dadurch gekennzeichnet, dass die zwischen der Zuggabel (5) und dem Drehgestell (24) angeordnete Schwenkeinrichtung von diagonal verlaufenden und schwenkbar am Drehgestell und der Zuggabel angeordneten Stangen (32, 33) gebildet ist, wobei die zugeordneten Schwenklager (18, 19, 20, 21) jeweils versetzt zur Längsachse (22) des Zugwagens (1) endseitig des kurzen Schenkels (15–16), der die Basis der ein gleichschenkliges Dreieck bildenden Zuggabel (5) darstellt, bzw. endseitig des Querbalkens (26), der dem Drehgestell (24) vorgesetzt ist, angeordnet sind.

2. Lastzug nach Anspruch 1, dadurch gekennzeichnet, dass die die Schwenklager (18, 19, 20, 21) verbindenden Stangen (32, 33) ineinandergeführt ausgebildet sind.

3. Lastzug nach Anspruch 2, dadurch gekennzeichnet, dass die eine die Schwenklager (18, 21) verbindende Stange (32) einen Längsschlitz (40) aufweist, während die andere Stange (33) im gleichen Bereich im Querschnitt reduziert ausgebildet ist.

4. Lastzug nach Anspruch 1, dadurch gekennzeichnet, dass die Zuggabel (5) am dem Anhänger (6) zugewandten Ende (23) einen Querbalken (27) aufweist, der schwenkbar an der Zuggabel befestigt und endseitig die Schwenklager (18, 19) trägt.

5. Lastzug nach Anspruch 4, dadurch gekennzeichnet, dass die Querbalken (26, 27) endseitig schräg angesetzte Ansätze (29, 30) aufweisen, die ihrerseits die Schwenklager (18, 19 bzw. 20, 21) aufnehmen.

6. Lastzug nach Anspruch 1, dadurch gekennzeichnet, dass die Länge der die Schwenklager (18, 19, 20, 21) für die Stangen (32, 33) aufweisenden Querbalken (26, 27) 30 bis 70% der Breite von Zugwagen (1) bzw. Anhänger (6) beträgt.

7. Lastzug nach Anspruch 1, dadurch gekennzeichnet, dass die Sperre (11) zum Festlegen der Zuggabel (5) als der Einpunktkupplung (10) vorgelagerter Bügel (43) mit der Kupplungsbohrung (45) angepasstem Führungsloch (6) ausgebildet ist.

8. Lastzug nach Anspruch 1, dadurch gekennzeichnet, dass die Zuggabel (5) sich verstarrend über ein Spannschloss (48) mit dem Querbalken (27) verbunden ist.

9. Lastzug nach Anspruch 1, dadurch gekennzeichnet, dass die beiden Schenkel (49, 50) der Zuggabel (5) verlängert ausgebildet sind, so dass ihre freien Endpunkte (51, 52) auf einer gedachten Geraden mit der Kupplungsbohrung (45) liegen und in dem Zugwagen (1) zugeordneten Schleifplatten (54, 55) geführt sind.

10. Lastzug nach Anspruch 9, dadurch gekennzeichnet, dass die in den Schleifplatten (54, 55) geführten Endpunkte (51, 52) abgerundet oder mit einer Kugel versehen sind.

## Claims

1. Truck unit consisting of a traction vehicle (1) and a trailer (6) combined by means of a drawbar (5) forming an isosceles triangle which, on the one hand, is fixed to the traction vehicle (1) in a way as to be optionally blocked against lateral swivelling and, on the other hand, to the axle (7) – (formed to be of a self-adjusting type equipped with turntable (24)) – of the trailer (6), via an appertaining swivelling device, characterized in that the swivelling device arranged between the drawbar (5) and the turntable (24) is configured by bars (32, 33) arranged diagonally and swivelling in relation to the turntable and the drawbar, with the appertaining swivelling bearings (18, 19, 20, 21) each arranged in a staggered position to the longitudinal axis (22) of the traction vehicle (1) at the extremity of the short leg (15–16) being the basis of the drawbar (5) of an isosceles triangle configuration viz. at the extremity of the transverse bar (26) which is arranged in front of the turntable (24).

2. Truck unit according to claim 1, characterized in that the bars (32, 33) interconnecting the swivelling bearings (18, 19, 20, 21) are of an intermeshing configuration.

3. Truck unit according to claim 2, characterized in that one of the bars (32) interconnecting the swivelling bearings (18, 21) is provided with a longitudinal slot (40), whereas the other one (33) exhibits a reduced cross-section over the slot area.

4. Truck unit according to claim 1, characterized in that the drawbar (5), at its extremity (23) facing the trailer (6) is equipped with a transverse bar (27) which is fixed by a swivelling connection to the drawbar, whereas the swivelling bearings (18, 19) are located at the extremities of the transverse bar (27).

5. Truck unit according to claim 4, characterized in that the transverse bars (26, 27) exhibit extensions (29, 30) fitted diagonally to their extremities, to receive the swivelling bearings (18, 19 viz. 20, 21).

6. Truck unit according to claim 1, characterized in that the length of the transverse bars (26, 27) provided with the swivelling bearings (18, 19, 20, 21) for the bars (32, 33) amounts to between 30 and 70% of the width of the traction vehicle (1) viz. trailer (6).

7. Truck unit according to claim 1, characterized in that the interlocking device (11) for fixation of the drawbar (5) is configured as a loop (43) arranged in front of the single coupling (10) and has its guide boring (6) located so as to match with the boring in the coupling (45).

8. Truck unit according to claim 1, characterized in that the drawbar (5) is rigidly connected via a turnbuckle (48) to the transverse bar (27).

9. Truck unit according to claim 1, characterized in that the 2 isosceles (49, 50) of the drawbar (5) are provided with extensions whose 2 extremities (51, 52) are located on an imaginary straight line with the boring (45) of the coupling and are guided by slide plates (54, 55) mounted to the traction vehicle.

10. Truck unit according to claim 9, characterized in that the extremities (51, 52) guided in the slide plates (54, 55) are either rounded or equipped with a spherical body.

**Revendications**

1. Convoi de camion comportant un camion à remorque (1) et une remorque (6) formant une unité de convoi en étant solidaire d'une part par l'intermédiaire d'un essieu (7) susceptible d'être bloqué vis-à-vis d'un pivotement latéral et d'autre part par l'intermédiaire de l'essieu (7) conçu comme essieu à écartement stable avec bâti tournant (24) de la remorque (6) avec fourche de remorque (5) formant un triangle isocèle et à laquelle est attaché un dispositif de pivotement, caractérisé par ce que le dispositif de pivotement agencé entre la fourche de remorque (5) et le bâti tournant est constitué des barres (32, 33) diagonaux et articulés sur le bâti tournant (24) et la fourche de remorque (5) où les paliers de pivotement (18, 19, 20, 21) y attachés sont disposés chaque fois décalés par rapport à l'axe longitudinal (22) du camion à remorque (1) respectivement sur l'extrémité de la courte jambe (15, 16) constituant la base d'un triangle isocèle formé la fourche de camion (5) et sur l'extrémité de la barre transversale (26) disposée en amont du bâti tournant (24).

2. Convoi de camion suivant la revendication 1 caractérisé par ce que les barres (32, 33) reliant entre eux les paliers de pivotement (18, 19, 20, 21) sont emboîtés l'une dans l'autre.

3. Convoi de camion suivant la revendication 2 caractérisé par ce que l'une (32) des barres reliant entre eux les paliers de pivotement (18, 21) présente une saignée (40) tandis que l'autre barre (33), au même niveau, est réduite en section.

4. Convoi de camion suivant la revendication 1 caractérisé par ce que la fourche de remorque (5) présente sur l'extrémité (23), située sur le côté remorque (6), une barre transversale (27) est fixé par une, articulation sur la fourche de remorque et porte sur l'extrémité les paliers de pivotement (18, 19).

5. Convoi de camion suivant la revendication 4 caractérisé par ce que les barres transversales (26, 27) présentent des extrémités biseautées (28, 29) qui reçoivent de leur côté les paliers de pivotement (réspectivement 18, 19 et 20, 21).

6. Convoi de camion suivant la revendication 1 caractérisé par ce que la longueur des barres transversales (18, 19, 20, 21) comportant les barres (32, 33) et présentant les paliers de pivotement (18, 19, 20, 21) est de 30 à 70% de la largeur respectivement de camions à remorque (1) et de remorques (6).

7. Convoi de camion suivant la revendication 1 caractérisé par ce que le déclic (11) destiné à arrêter la fourche de remorque (5) est conçu comme accouplement (10) en amont de la chape (43) avec un trou de guidage adapté à l'alésage d'accouplement (6).

8. Convoi de camion suivant la revendication 1 caractérisé par ce que la fourche de remorque (5) est solidaire de la barre transversale (27) d'une manière rigide par l'intermédiaire d'un tendeur (48).

9. Convoi de camion suivant la revendication 1 caractérisé par ce que les deux ailes (49, 50) de la fourche de remorque (5) sont prolongés de telle manière que leurs extrémités libres se situent sur une droite théorique formée avec l'alésage d'accouplement et soient guidés dans les patins de sabot (54, 55).

10. Convoi de camion suivant la revendication 9 caractérisé par ce que les extrémités (51, 52) guidés dans les patins de sabot (54, 55) sont arrondies et munies d'une bille.

*Fig.1*

0 111 760

*Fig.2*

*Fig.3*

## Fig.4

## Fig.5

*Fig.6*

## Fig.7